# EUROPEAN PATENT APPLICATION

(11) **EP 1 327 611 A2**
(43) Date of publication of application: **16.07.2003**
(21) Application number: 03000005.3
(22) Date of filing: 02.01.2003
(51) Int. Cl.: C03B 37/012, G02B 6/16

(54) **Method for manufacturing a holey optical fiber using an ultrasonic drill**

(30) Priority: 09.01.2002 JP 2002001980
(71) Applicant: Nippon Telegraph and Telephone Corporation, Tokyo 100-8116 (JP)
(72) Inventor: Tajima, Katsusuke, Musashino-shi, Tokyo 180-8585 (JP); Ohashi, Masaharu, Musashino-shi, Tokyo 180-8585 (JP); Kurokawa, Kenji, Musashino-shi, Tokyo 180-8585 (JP); Nakajima, Kazuhide, Musashino-shi, Tokyo 180-8585 (JP); Yoshizawa, Nobuyuki, Musashino-shi, Tokyo 180-8585 (JP)
(74) Representative: HOFFMANN - EITLE

(57) **Abstract**

In a method for manufacturing an optical fiber having a core portion for waveguiding lights, and a plurality of holes arranged around the core portion, the optical fiber is manufactured by puncturing the holes in a glass rod that is to become the optical fiber, by using an ultrasonic drill, and then drawing the glass rod with the holes to form the optical fiber.

## Description

### BACKGROUND OF THE INVENTION

### FIELD OF THE INVENTION

The present invention relates to a method for manufacturing optical fibers applicable to transmission media to be used in the optical communication network and the optical signal processing, for example.

### DESCRIPTION OF THE RELATED ART

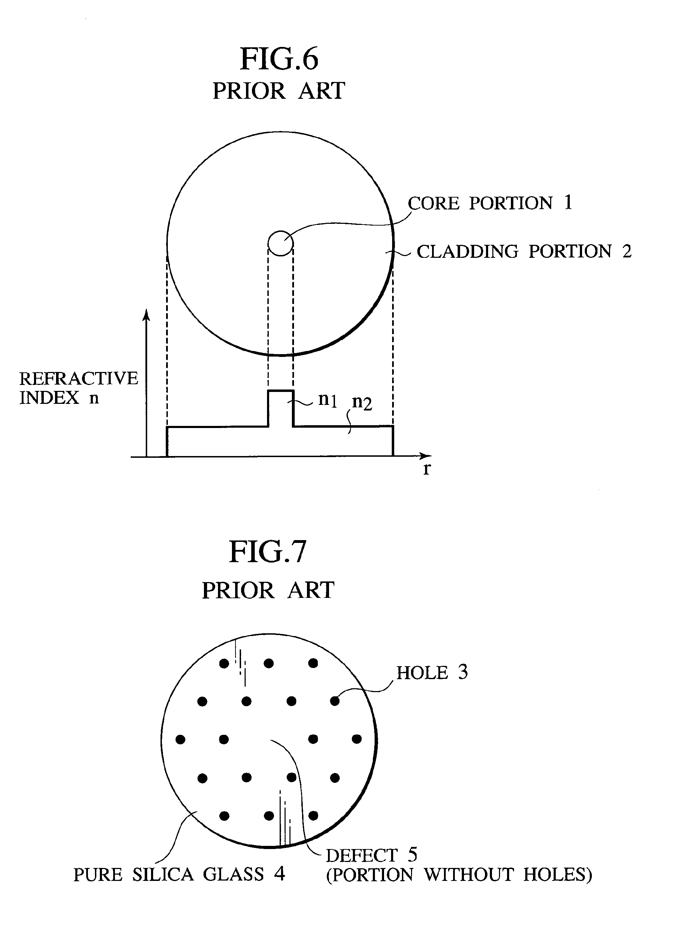

The conventional optical fiber has a structure as shown in Fig. 6, in which a cladding portion 2 with a low refractive index is arranged around an outer side of a core portion 1 with a high refractive index.

On the other hand, the photonic crystal optical fibers (PCF) has a structure as shown in Fig. 7, in which holes 3 are punctured periodically in a single glass such as pure silica glass 4 (see, J.C. Knight, T.A. Birks, P. St. J. Russell and D.M. Atkin, "All-silica single-mode optical fiber with photonic crystal classing", Opt. Lett. 21, 1547-1549 (1996)).

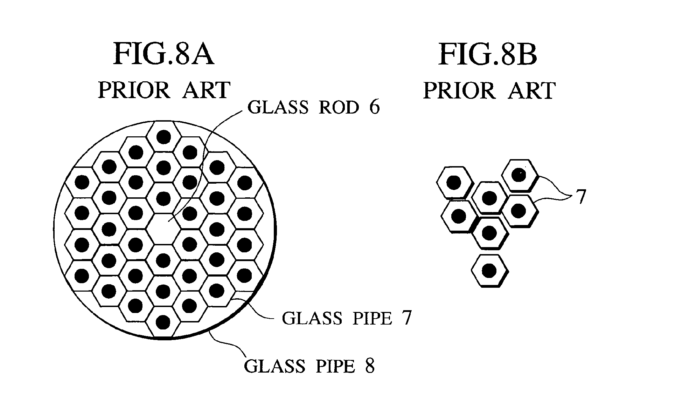

The intervals between neighboring holes 3 are all set to be equal to each other. However, at a central portion of this fiber, a defect 5, i.e., a portion without holes, is arranged. This defect 5 functions as a core for confining lights. A conventional method for manufacturing this optical fiber is shown in Fig. 8A. As shown in Fig. 8A, a hexagonal glass rod 6 with no hole is arranged at a central portion while hexagonal glass pipes 7 with holes are arranged around an outer side of the glass rod 6, and these glass rod 6 and glass pipes 7 are inserted into a glass pipe 8. Then, this is drawn under the high temperature of approximately 2000 °C to form an optical fiber.

The above described method for manufacturing the optical fiber has the following problems.
(1) At a time of forming the optical fiber, the hexagonal glass rod 6 is deformed due to the heat so that the interval and size of the holes of the glass pipes 7 are deformed and the holes as designed cannot be formed, such that it has been impossible to manufacture the optical fibers at high yield.
(2) At a time of heating and drawing the bundled glass pipes 7, a diameter and a position of the holes of the glass pipes 7 are largely deformed from the initial values as shown in Fig. 8B, so that it has been impossible to puncture the holes of desired sizes at desired positions.
(3) At a time of manufacturing the hexagonal glass pipes 7, there is a need to apply the grinding processing to side faces of the glass pipes 7, but the generation of scars during the processing and the mismatching of boundary surfaces at a time of bundling the glass pipes 7 are inevitable.

For this reason, at a time of integrating the bundled glass pipes 7, air bubbles are created before the scars disappear and left inside the glass.

This effectively adds unnecessary holes to the PCF so that it has been the major problem in manufacturing the PCF.

Thus the conventional method has been capable of manufacturing only a short fiber of several hundred meters at most. Moreover, it has been impossible to maintain the hole diameters and hole intervals at high precision in the length direction of the optical fiber, so that it has been impossible to manufacture the optical fiber with a low loss as designed.

### BRIEF SUMMARY OF THE INVENTION

It is therefore an object of the present invention to provide an optical fiber manufacturing method which is capable of manufacturing the PCF with a low loss, a constant dispersion characteristic, and a sufficient length.

According to one aspect of the present invention there is provided a method for manufacturing an optical fiber having a core portion for waveguiding lights and a plurality of holes arranged around the core portion, the method comprising the steps of: puncturing the holes in a glass rod that is to become the optical fiber, by using an ultrasonic drill; and drawing the glass rod with the holes to form the optical fiber.

Other features and advantages of the present invention will become apparent from the following description taken in conjunction with the accompanying drawings.

### BRIEF DESCRIPTION OF THE DRAWINGS

Fig. 1 is a graph showing a relationship between a dispersion and a wavelength in the case of d/Λ = 0.5.

Fig. 2 is a graph showing a relationship between a dispersion and a wavelength in the case of Λ = 1.6 µm.

Fig. 3 is a diagram schematically showing the first embodiment of an optical fiber manufacturing method according to the present invention.

Figs. 4A and 4B are diagrams schematically showing the second embodiment of an optical fiber manufacturing method according to the present invention.

Fig. 5 is a diagram schematically showing the third embodiment of an optical fiber manufacturing method according to the present invention.

Fig. 6 is a diagram showing a structure of a conventional optical fiber.

Fig. 7 is a diagram showing a structure of a photonic crystal fiber.

Figs. 8A and 8B are diagrams schematically showing the conventional PCF manufacturing method.

### DETAILED DESCRIPTION OF THE INVENTION

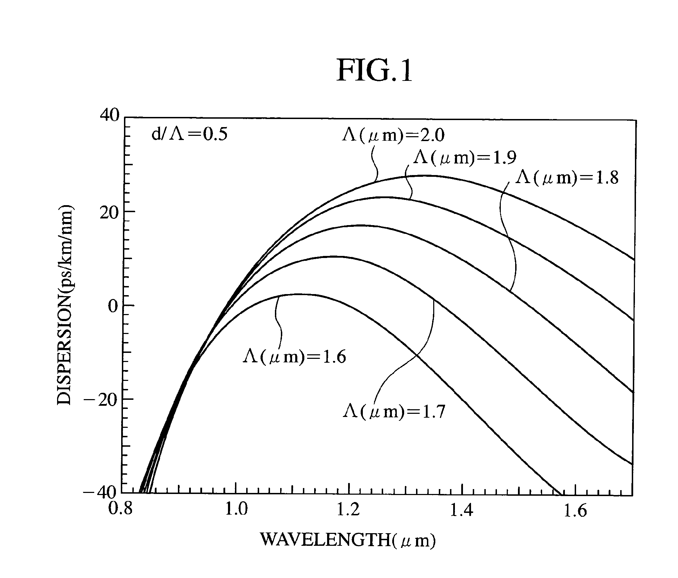

Referring now to Fig. 1 to Fig. 5, the embodiments of the optical fiber manufacturing method according to the present invention will be described in detail.

In the present invention, the holes are punctured in a glass rod that is to become an optical fiber by using an ultrasonic drill. For example, in the case of puncturing the hole with an inner diameter of 3 mm in the glass by the ultrasonic drill, it is possible to puncture the hole with the inner diameter at a precision of 3±0.01 mm. Also, in the case where the hole interval is 5 mm, it is possible to puncture holes with the hole interval at a precision of 5±0.01 mm.

Consequently, it is possible to manufacture the glass rod with holes that is to become a PCF at a high precision. The holes punctured by the ultrasonic drill have very few cracks or scars on their inner surfaces. It is also possible to maintain the hole diameters and the hole intervals at high precision along the length direction, so that it is possible to manufacture the glass rod with holes with a precision necessary for the PCF easily. Moreover, the assembling of pipes that has caused problems conventionally is unnecessary, so that the mixing of air bubbles due to the scars also does not occur.

Next, the drawing processing is applied to this glass rod with holes by a heating furnace. By maintaining the temperature distribution in the heating furnace uniform, the shapes of the holes are hardly changed even after the drawing. Consequently, it is possible to maintain the shapes of the holes as designed after the optical fiber is formed, and it is possible to manufacture the optical fibers with the designed characteristics at high yield.

The dispersion characteristic and the MFD (Mode Field Diameter) characteristic of the PCF are determined by a hole diameter d and a hole interval A. In order to manufacture the PCF at high yield, it is important to have good reproducibility for the hole diameter and the hole interval.

Also, in order to realize the PCF with a low loss, (1) a glass that is to become an optical fiber must have a low loss (Rayleigh scattering loss, infrared absorption loss, etc.); (2) the shapes of the holes must be maintained along the length direction of the optical fiber; (3) the surface roughness of the holes must be suppressed; and (4) impurities on an inner surface and inside of the hole must be reduced.

Fig. 1 shows the wavelength dependency of the dispersion in the case of d/Λ = 0.5. The zero dispersion wavelength is 1.2 µm in the case where Λ is 1.6 µm, and the zero dispersion wavelength is 1.68 µm in the case where Λ is 1.9 µm. Thus, when Λ is increased by 0.3 µm, the zero dispersion wavelength is increased by 0.48 µm.

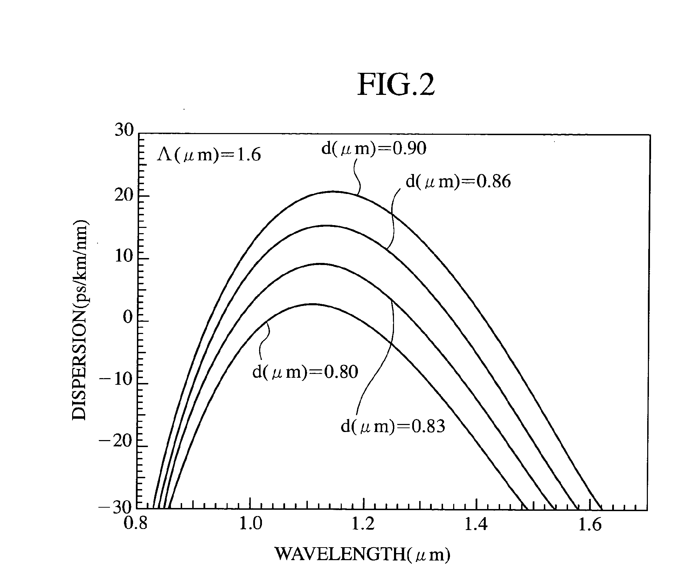

Fig. 2 shows the wavelength dependency of the dispersion in the case of Λ = 1.6 µm. For example, when the hole diameter is increased from 0.8 µm to 0.9 µm, the zero dispersion wavelength is changed from 1.2 µm to 1.4 µm. Namely, when the hole diameter is changed by 11%, the zero dispersion wavelength is changed by 200 nm. Consequently, the hole diameter variation of less than or equal to 0.5% is required in order to suppress the change of the zero dispersion wavelength to about 10 nm.

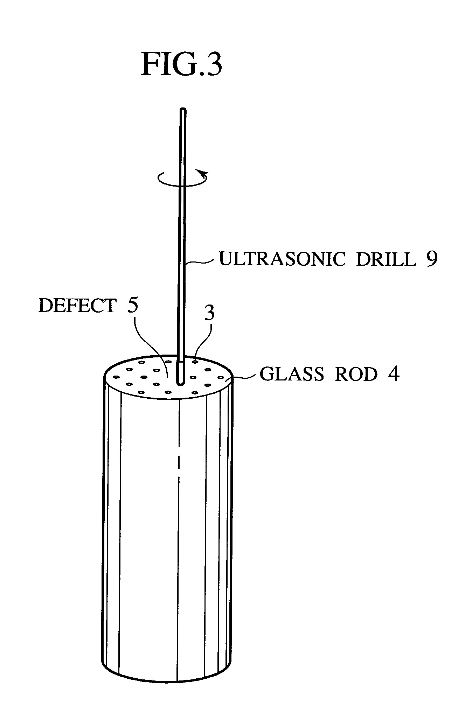

Fig. 3 schematically shows the first embodiment of the optical fiber manufacturing method according to the present invention.

In this embodiment, eighteen holes 3 with the inner diameter of 3 mm were punctured at 5 mm interval by the ultrasonic drill 9 in the glass rod 4 with an outer diameter of 40 mm and the length of 200 mm. In the PCF, a defect 5 without holes is arranged at a central portion in order to provide the waveguide characteristic. After puncturing the holes, a part of the glass rod is cut out and the shape of the hole was measured. The hole diameter was 3 mm ± 10 µm, and the hole interval was 5 mm ± 10 µm.

Then, after cleaning the interior of the holes by the fluoric acid and drying, the glass rod with holes are heated by an electric furnace and drawn to form the optical fiber with a diameter of 125 µm. The resulting optical fiber had the length of 10 km.

After the drawing to form the optical fiber, the optical fiber is cut out and the hole diameter and the hole interval were measured by the electron microscope. The hole diameter was 9.4 µm and the hole interval was 15.6 µm after the drawing. In this way, the optical fiber with holes in shapes similar to the shapes of the holes originally punctured in the glass rod was realized, and there was no change in the shapes of the holes throughout the entire length of the optical fiber. Also, this optical fiber had the low light loss of 1 dB/km at the wavelength of 1.3 µm, and 0.5 dB/km at the wavelength of 1.5 µm.

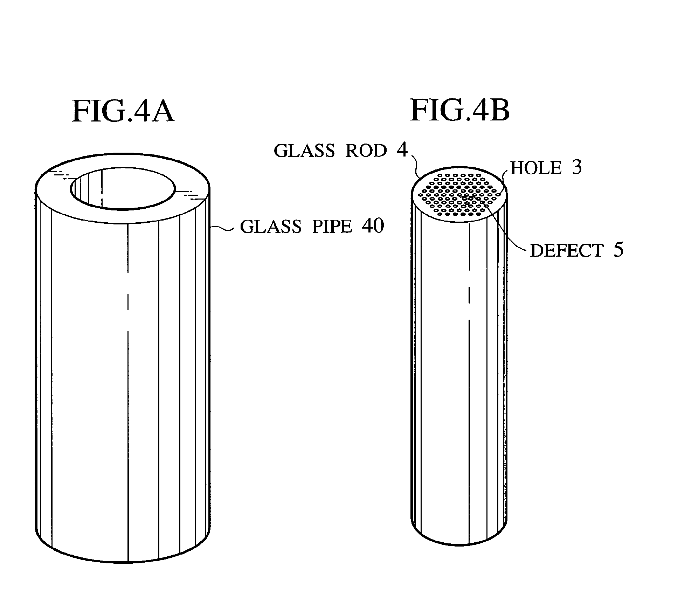

Figs. 4A and 4B schematically show the second embodiment of the optical fiber manufacturing method according to the present invention.

In this embodiment, ninety holes 3 with the hole diameter of 1.4 mm were punctured at the hole interval of 2.9 mm by the ultrasonic drill in the glass rod 4 with an outer diameter of 40 mm and the length of 200 mm, as shown in Fig. 4B. A defect 5 without holes is arranged at a central portion.

Then, after cleaning and drying the glass rod 4 with holes so manufactured, the glass rod with holes are drawn until the outer diameter became 8 mm by using the burner. Then, this glass rod is inserted into a glass pipe 10 with the outer diameter of 40 mm and the inner diameter of 9 mm as shown in Fig. 4A, and drawn to form the optical fiber with a diameter of 125 µm. The resulting optical fiber had the length of 5 km. The hole diameter was 0.9 µm and the hole interval was 1.8 µm after the drawing, and they were constant throughout the entire length of the optical fiber.

This optical fiber had the low loss of 1 dB/km at the wavelength of 1.3 µm, and 0.6 dB/km at the wavelength of 1.55 µm. The PCF so manufactured had the zero dispersion wavelength of 1.55 µm, and the dispersion slope of -0.1 ps/km/nm² at the wavelength of 1.55 µm. When the dispersion at the wavelength of 1.55 µm in the dispersion shifted fiber with the zero dispersion at 1.55 µm was compensated by using this PCF, the dispersion value of ±0.1 ps/km/nm² was obtained at the wavelength of 1.5 to 1.6 µm.

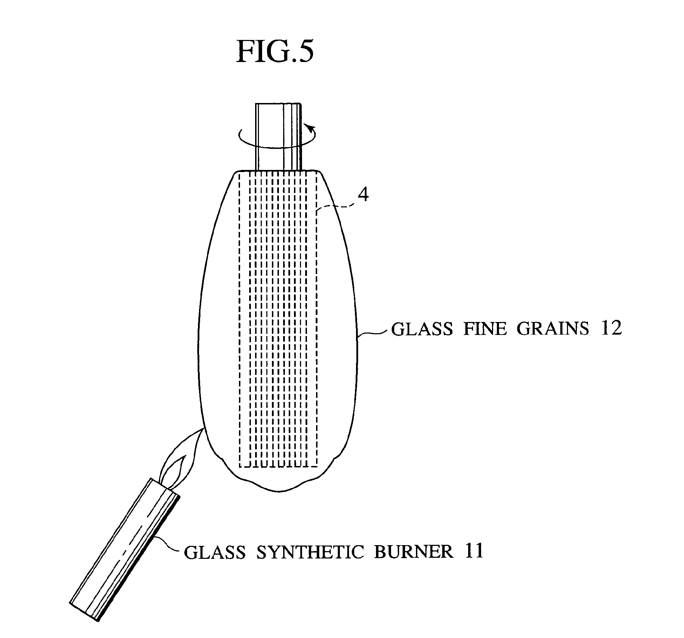

Fig. 5 schematically shows the third embodiment of the optical fiber manufacturing method according to the present invention.

In this embodiment, one hundred twenty six holes with the hole diameter of 1.3 mm were punctured at the hole interval of 2.8 mm by the ultrasonic drill in the glass rod 4 with an outer diameter of 40 mm, similarly as in the first embodiment.

Then, the glass rod with holes are drawn until the outer diameter became 10 mm, and glass fine grains 12 to form a cladding portion are accumulated on an outer surface of the glass rod 4 with holes by using a glass synthetic burner 11 according to the VAD (Vapor phase Axial Deposition) method, as shown in Fig. 5. Then, the glass rod 4 with holes are heated at 1700 °C in the electric furnace to make the glass fine grains transparent and form a starting glass material with the outer diameter of 50 mm and the hole diameter of 0.33 mm.

This glass material with holes is heated in the heating furnace and drawn to form the optical fiber with a diameter of 125 µm. The resulting optical fiber had the length of 10 km. The hole diameter was 0.83 µm and the hole interval was 1.8 µm after the drawing, and they were constant throughout the entire length of the optical fiber.

This optical fiber had the low loss of 2 dB/km at the wavelength of 1.3 µm, and 0.5 dB/km at the wavelength of 1.55 µm. The PCF so manufactured had the zero dispersion wavelength of 1.31 µm, and the dispersion slope of -0.1 ps/km/nm² at the wavelength of 1.55 µm. When the dispersion at the wavelength of 1.3 to 1.4 µm in the conventional single mode fiber (SMF) was compensated by using this PCF, the dispersion value of ±0.1 ps/km/nm² was obtained at the wavelength of 1.3 to 1.4 µm.

As described, the present invention provides a method for manufacturing the photonic crystal optical fibers which is characterized in that the holes are punctured in the glass rod that is to become the optical fiber by using the ultrasonic drill, and then drawn to form the optical fiber, that can be transmission media to be used in the optical communication network and the optical signal processing.

Consequently, according to the present invention, it becomes possible to manufacture the optical fibers having a low loss, a constant dispersion characteristic, a hole diameter and a hole interval as designed, and a long length, easily at high yield by puncturing holes in the glass rod at high precision and drawing the glass rod to form the optical fiber.

According to the present invention, it is possible to puncture several to several hundreds of holes with a small diameter variation (about 1 µm) at the equal hole interval. By the ordinary drawing of the glass rod with holes, the shapes of the holes remain similar to the initial shapes of the holes so that the optical fiber as designed can be manufactured easily. In addition, there is no glass connecting portion between adjacent holes, so that the loss due to the structural mismatching will not occur. For this reason, the optical fibers with a long length and a low loss as designed can be manufactured at high yield. The optical fibers so manufactured can be utilized widely as devices for compensating dispersion and utilizing the nonlinear effect, optical fibers for maintaining polarization, etc.

It is also to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A method for manufacturing an optical fiber having a core portion for waveguiding lights and a plurality of holes arranged around the core portion, the method comprising the steps of:
puncturing the holes in a glass rod that is to become the optical fiber, by using an ultrasonic drill; and
drawing the glass rod with the holes to form the optical fiber.

2. The method of claim 1, wherein the drawing step includes the steps of:
heating and drawing the glass rod with the holes and then inserting the glass rod with the holes into a glass pipe; and
drawing the glass rod with the holes and the glass pipe to form the optical fiber.

3. The method of claim 1, further comprising the step of accumulating glass fine grains to be a cladding portion on an outer surface of the glass rod with the holes, and making the glass fine grains transparent by heating, such that the drawing step draws the glass rod with the holes and the glass fine grains.
